Europäisches Patentamt

European Patent Office

Office européen des brevets

(19)

(11) Publication number: **0 059 870**

**A1**

## (12) EUROPEAN PATENT APPLICATION

(21) Application number: 82101326.5

(22) Date of filing: 20.02.82

(51) Int. Cl.³: **B 60 N 1/00**

(30) Priority: 10.03.81 GB 8107542

(43) Date of publication of application:
15.09.82 Bulletin 82/37

(84) Designated Contracting States:
DE NL SE

(71) Applicant: UOP Inc.
10 UOP Plaza Algonquin & Mt. Prospect Roads
Des Plaines Illinois 60016(US)

(72) Inventor: Rose, David Peter
Walnut Tree House Church Street
Crick Northants(GB)

(74) Representative: Taylor, Derek George et al,
MATHISEN, MACARA & CO. European Patent Attorneys
Lyon House Lyon Road
Harrow Middlesex, HA1 2ET(GB)

(54) A suspension system for a vehicle seat.

(57) The suspension system comprises a gas spring on which a seat is supported, the gas spring (21) being connected by an inlet valve (24) to a compressed gas source, and via an exhaust valve (26) to "exhaust". A lever, movable by a part of the seat suspension which moves as the seat rises or falls from a mid-ride position, operates the valves (24, 26) alternately to raise or lower the seat by allowing gas to enter or leave the gas spring. A small orifice in the flow line between the gas spring and the valves restricts the flow of gas so much that vibrations under about one second duration do not significantly raise or lower the seat. A dump valve (38) operable when the seat reaches an up-stop position directly connects the gas spring to exhaust for a quick return to its mid-ride position.

FIG.5.

EP 0 059 870 A1

A SUSPENSION SYSTEM FOR A VEHICLE SEAT

This invention relates to a suspension system for a vehicle seat.

It is known from our British Patent No: 1,561,127 to provide a suspension system for a vehicle seat, the seat being of the type comprising a seat part, a base part and guide means for guiding the seat part in upward and downward movement relative to the base part, the system comprising a gas spring for connection at its opposite ends to the base part and to the seat part respectively, the gas spring being capable of expansion and contraction in a direction between said opposite ends of the gas spring, and valve means communicating with the interior of the gas spring and operable selectively to connect the gas spring interior with a source of compressed gas or with exhaust in order to expand or contract the gas spring, and thereby raise or lower the seat part.

In this known system, the valve means comprised an inlet valve and outlet valve, for example of the Schrader type, which were operated by a lever engageable with the pins of the valves, so that by moving the lever in opposite directions the seat could be raised or lowered. Such a system was designed to be operated manually by the seat occupant to raise or lower the seat to a desired height.

Seat-height control devices are also known which are operable automatically by connecting the valve means to a member of the seat which rises or falls with the seat part. In this way, if the seat occupant gets up from the seat, the seat part rises as a result of the load of the occupant being removed from the gas spring, but the gas spring is automatically connected to "exhaust" to allow the seat part to return to the position at which the valve means is closed.

Such a system inherently has the serious disadvantage that when the vehicle is in motion, particularly over rough ground, every time the seat is vibrated upwardly the exhaust will open to lower the seat part, and every time the seat part falls, the inlet valve will open to raise it again. As a result, the seat part will constantly be moved upwardly and downwardly to rectify vibrational movements of the seat part away from the desired ride position. One alternative is to provide an arrangement which will close the compressed gas supply and the exhaust when the vehicle is in motion. Another is to connect a dash-pot or other dampening device in the mechanical connection between the valve means and the suspension, but such devices are not entirely satisfactory, in particular because they involve substantial additional cost.

This disadvantage has been overcome, in accordance with the present invention, in that the connection between the valve means and the gas spring includes a throttle device which reduces the flow into and out of the gas spring, whenever the valve means is operated, to such a low value that the gas spring is substantially unaffected by vibrational movement of the seat part relative to the base part of a frequency above about 1 cycle per second.

In fact, gas will always flow into the inlet or out of the exhaust of the valve means when the inlet or outlet valve is open as a result of the seat part being displaced from a desired position, but the amount of this flow will be so small, and under vibrational conditions the small amount of inlet gas flowing through the valve means will be equal to the small amount of exhaust gas flowing through the valve means, that the total mass of gas within the gas spring will remain substantially constant. This throttling effect also has the advantage that the mass of gas (in practice normally air supplied from the air compressor of the vehicle) consumed by the system is kept to a low value.

The invention is illustrated in the accompanying drawings in which:-

Figure 1 is a diagrammatic side elevation of a vehicle seat mounted on a suspension which includes a gas spring;

Figure 2 is a section through a portion of the vehicle seat of Figure 1 to an enlarged scale;

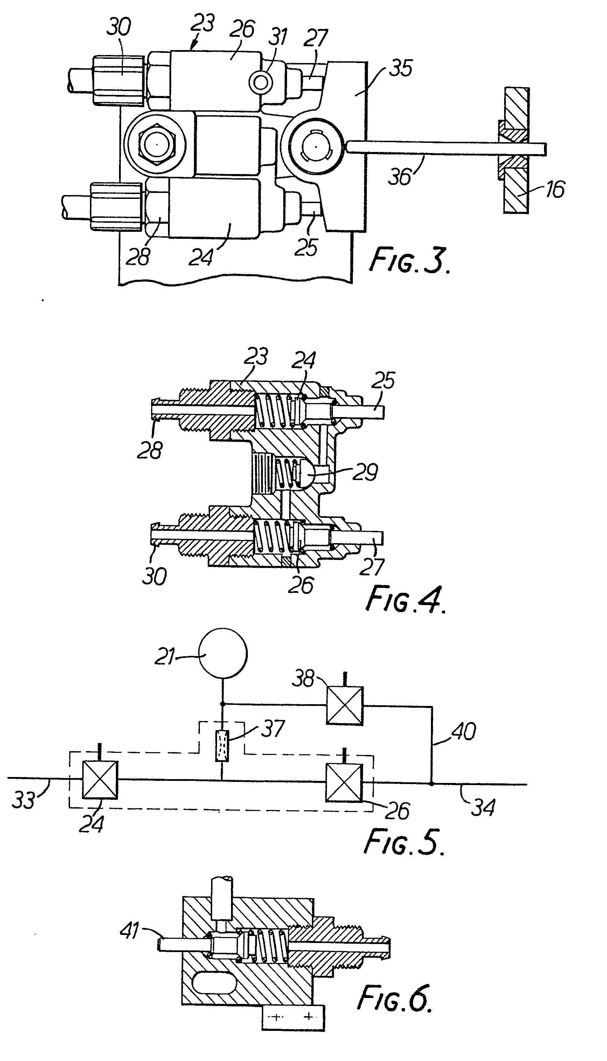

Figure 3 is a view on the line III-III of Figure 2;

Figure 4 is a section through the valve device of Figure 3;

Figure 5 is a diagrammatic representation of the fluid circuit which interconnects the inlet and exhaust valves, and includes a dump valve, and

Figure 6 is a section through the dump valve on the line VI-VI of Figure 2.

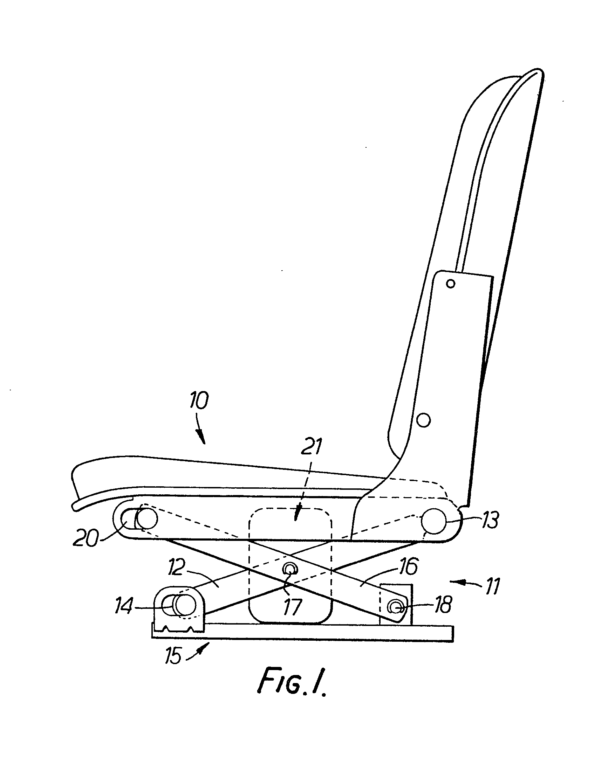

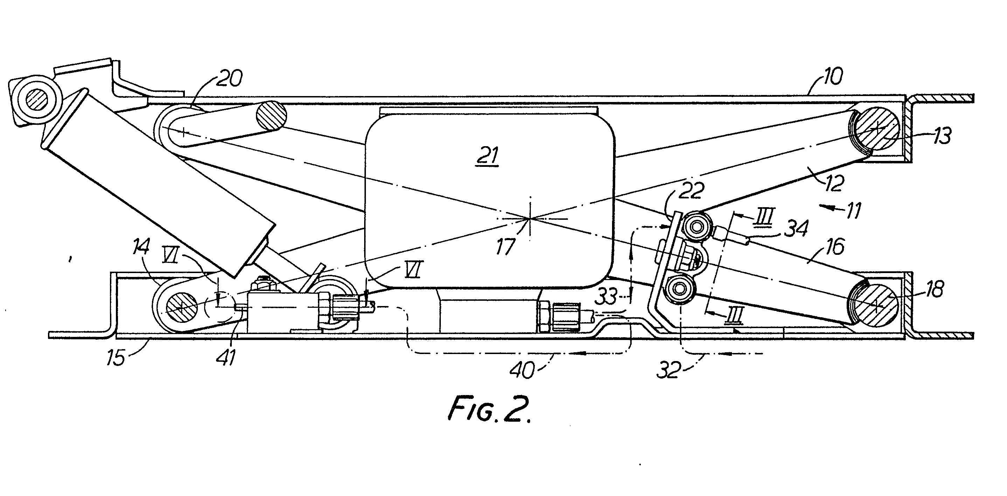

As shown in Figures 1 and 2, the vehicle seat comprises a seat part 10 mounted on a suspension 11 which comprises a crossed arm linkage formed by a pan 12 pivoted at its rearward upper end 13 to the seat part and connected through a pivotal sliding coupling 14 at its lower forward end to a base part 15, and two parallel-spaced arms 16 pivoted centrally at 17 to opposite sides of the pan. The arms 16 have fixed pivotal connections 18 at their rearward ends to the base part 15 and a sliding pivot connection 20 at their forward upper ends to the seat part 10. In addition, a gas spring 21, in the form of a flexible envelope, is mounted wihin an opening of the pan, the lower end of the gas spring being fixed to the base part 15 and the upper end fixed to the seat part 10.

The valve means 22 comprises a valve housing 23 containing an inlet valve 24 having a spring-biased valve pin 25 extending through the housing, an exhaust valve 26 similarly having a spring-biased valve pin 27 extending outwardly of the housing.

The inlet valve 24 is located in a passage of the valve housing extending between an inlet port 28 and a gas spring port 30, and the exhaust valve 26 is located in a passage of the valve housing extending between the gas spring port 30 and an exhaust port 31. A first flow line 32 connects the inlet port to a compressed air source (not shown), a second flow line 33 connects the gas spring port 30 to the gas spring 21, and a third flow line 34 connects the exhaust port to a suitable exhaust location. The valve housing optionally contains a non-return valve 29 in the flow passage between the gas spring port 30 and the inlet port 28, as seen in Fig. 4.

A lever 35 is pivoted to the housing 23 to operate the inlet valve pin 25 in one direction of lever movement and the exhaust valve pin 27 in the opposite direction of lever movement, the valve lever being connected by an operating arm 36 to one of the arms 16 of the seat suspension, so that as the seat part 10 moves upwardly or downwardly from its mid-ride position, the exhaust valve 26 or inlet valve 24 is opened. The flow line 33 between the gas spring 21 and the valve housing, or the gas spring port 30 itself, contains a throttle or restriction 37 which can be in the form of a removable disc or can be merely a small aperture in the gas spring port 30. This aperture can be, for example, 0.4 mm diameter or such other size in relation to the pressure of the compressed air source as to provide a throttled flow into and out of the gas spring such that there is an effective time delay of about five seconds before significant movement of the seat part will occur.

In practice, therefore, the seat part will only rise or fall when the seat occupant leaves the seat or initially sits on the seat. This rise or fall will be corrected and the seat part returned to its selected position as the movement of the lever 35 by arm 16 opens the exhaust valve 26 or the inlet valve 24 to contract or expand the spring to compensate for the changed load on the spring.

In order to vary the desired height of the ride position of the seat part relative to the base part, various means can be employed. For example, the valve lever 35 can be made movable relative to its operating arm 36, or the operating arm can be made movable relative to the part of the seat, e.g. arm 16, to which it is connected, in each case to vary the position of the valve lever relative to the said part of the seat from which the valve means is operated.

When the seat occupant gets off the seat, the compressed air in the gas spring 21 drives the seat part immediately up to the up-stop position of the seat. The exhaust valve takes over and exhausts air to drop the seat part down to the ride position in which the exhaust valve closes. By reason of the throttle in the flow line 33, this operation takes about one minute, and the seat occupant is inconvenienced if he wishes to return to the seat before it has fallen to the ride position.

To overcome this disadvantage a dump valve 38 can be connected in a flow line 40 between the gas spring 21 and exhaust, i.e. in parallel with the exhaust valve 26, the dump valve having a valve pin 41 located in the path of a movable part (e.g. coupling 14) of the seat so that the valve 38 is opened when the seat engages the up-stop. This provides fast exhaust of air at the up-stop position and allows the seat part to fall quickly back to the mid-ride position.

Although the seat occupant will normally enter the seat hen the latter is at its mid-ride position, and the seat part is accordingly depressed immediately to its down/stop position, the full opening of the inlet valve to the compressed air supply will quickly restore the seat part to its ride position, e.g. in about four seconds.

8144:2JJK1

0059870

## CLAIMS

1. A suspension system for a vehicle seat, the seat being of the type comprising a seat part, a base part and guide means for guiding the seat part in upward and downward movement relative to the base part, the system comprising a gas spring for connection at its opposite ends to the base part and to the seat part respectively, the gas spring being capable of expansion and contraction in a direction between said opposite ends of the gas spring, and valve means communicating with the interior of the gas spring and operable selectively to connect the gas spring interior with a source of compressed gas or with exhaust in order to expand or contract the gas spring and thereby raise or lower the seat part, characterised in that the connection between the valve means and the gas spring includes a throttle device which is effective to reduce the flow into and out of the gas spring, whenever the valve means is operated, to such a low value that the gas spring is substantially unaffected by vibrational movement of the seat part relative to the base part of a frequency above about 1 cycle per second.

2. A suspension system according to claim 1 characterised by a dump valve arranged to be opened in response to the seat part reaching an up-stop position, the dump valve being connected between the gas spring and exhaust and operative when opened to release compressed air in the spring to atmosphere to bring the seat part quickly back to its ride position.

FIG.1.

0059870

FIG. 2.

FIG.3.

FIG.4.

FIG.5.

FIG.6.

## European Patent Office

# EUROPEAN SEARCH REPORT

Application number

EP 82 10 1326.5

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | US − A − 3 150 855 (J.W. CARTER et al.)<br>* column 2, lines 40 to 43; fig. 5 *<br>-- | 1 | B 60 N 1/00 |
| A | US − A − 3 954 245 (R.W. COSTIN)<br>-- | | |
| D,A | GB − A − 1 561 127 (UOP INC.)<br>---- | | |

**TECHNICAL FIELDS SEARCHED (Int.Cl. 3)**

B 60 N 1/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X | The present search report has been drawn up for all claims

| Place of search | Date of completion of the search | Examiner |
|---|---|---|
| Berlin | 16−04−1982 | BECKER |

EPO Form 1503.1 06.78